(19) **Europäisches Patentamt**
**European Patent Office**
**Office européen des brevets**

(11) Veröffentlichungsnummer : **0 099 322**
**B1**

(12) **EUROPÄISCHE PATENTSCHRIFT**

(45) Veröffentlichungstag der Patentschrift :
**22.10.86**

(51) Int. Cl.⁴ : **G 21 C   3/32**

(21) Anmeldenummer : **83710046.0**

(22) Anmeldetag : **02.07.83**

(54) **Kernbrennstoffkassette für einen Siedewasser-Kernreaktor.**

(30) Priorität : **12.07.82 SE 8204269**

(43) Veröffentlichungstag der Anmeldung :
**25.01.84 Patentblatt 84/04**

(45) Bekanntmachung des Hinweises auf die Patenterteilung : **22.10.86 Patentblatt 86/43**

(84) Benannte Vertragsstaaten :
**BE CH DE GB IT LI NL**

(56) Entgegenhaltungen :
**EP-A- 0 036 142**
**EP-A- 0 050 837**
**DE-A- 3 142 300**
**FR-A- 1 246 458**
**FR-A- 1 334 361**
**US-A- 3 164 530**
**US-A- 4 190 494**

(73) Patentinhaber : **AB ASEA-ATOM**
**S-721 83 Västeras (SE)**

(72) Erfinder : **van Santen, Aart, Dipl.-Ing.**
**Bernsborgsstigen 15**
**S-722 18 Västeras (SE)**
Erfinder : **Johansson, Anders, Dipl.-Ing.**
**Kvartärvägen 12**
**S-722 31 Västeras (SE)**
Erfinder : **Junkrans, Sigvard, Dipl.-Ing.**
**Renvägen 7**
**S-722 31 Västeras (SE)**
Erfinder : **Nylund, Olov, Dipl.-Ing.**
**Box 17051**
**S-720 17 Västeras (SE)**
Erfinder : **Blomstrand, Jan**
**Viktkastargatan 78**
**S-722 41 Västeras (SE)**

(74) Vertreter : **Boecker, Joachim, Dr.-Ing.**
**Rathenauplatz 2-8**
**D-6000 Frankfurt a.M. 1 (DE)**

## Beschreibung

Die Erfindung betrifft eine Brennstoffkassette für einen Siedewasserreaktor gemäß dem Oberbegriff des Anspruches 1. Solche Brennstoffkassetten sind beispielsweise bekannt aus den europäischen veröffentlichten Patentanmeldungen EP-A1-0 036 142 und EP-A1-0 050 837.

Die bekannten Brennstoffkassetten enthalten 64 Brennstäbe, die in vier Teilbündel unterteilt sind. Jedes Teilbündel hat vier mal vier Brennstabpositionen, die in einem quadratischen Gitter angeordnet sind. In jedem Teilbündel sind die Brennstäbe mit mehreren vertikal hintereinander angeordneten Abstandshaltern versehen. Jeder Abstandshalter besteht aus je vier mal vier Abstandshalterzellen, von denen jede einen ihr zugeordneten Brennstab umschließt.

Infolge des Kontaktes zwischen den Brennstofftabletten und der Brennstofftablettenhülle wird die letztere während des Reaktorbetriebes großen Beanspruchungen ausgesetzt. Berechnungen haben erheben, daß die Entstehung von entsprechenden Schäden an den Brennstäben erheblich reduziert werden kann, wenn die lineare Belastung des Stabes, d. h. die Leistung pro Längeneinheit verkleinert werden kann. Es wäre daher vorteilhaft, wenn man bei den oben genannten bekannten Brennstoffkassetten die Anzahl der Brennstäbe in einem gewissen Umfange vergrößern könnte unter Beibehaltung der äußeren Abmessungen der Brennstoffkassette, indem man den Brennstabdurchmesser in solchem Maße verkleinert, daß der Gesamtinhalt an brennbarem Material im wesentlichen genauso groß bleibt wie bei den bekannten Brennstoffkassetten.

Die kleinstmögliche Erhöhung der Stabzahl, die bei den bekannten Brennstoffkassetten unter Beibehaltung des dort verwendeten Konstruktionsprinzips möglich ist, ergibt sich aus der Verwendung von vier Teilbündeln mit je fünf mal fünf Brennstäben. Dadurch würde die Gesamtzahl der Brennstäbe in der Brennstoffkassette von vierundsechzig auf hundert erhöht werden. Eine solche Erhöhung würde zu einer Brennstoffkassette mit wesentlich größerem Querschnitt führen als bei den bekannten Brennstoffkassetten und/oder würde wesentlich dünnere Brennstäbe erfordern, als sie in der bekannten Brennstoffkassette verwendet werden. Der Querschnitt der Brennstoffkassettenhülle (Brennstoffkanal) und die Dicke der Brennstäbe sind jedoch bei den bekannten Brennstoffkassetten auf optimal zueinander passende Werte abgestimmt. Die Verwendung von einhundert Brennstäben anstelle von vierundsechzig würde eine zu große Abweichung von den optimalen Werten erfordern und daher eher zu einer verschlechterten Brennstoffkassette führen.

Der vorliegenden Erfindung liegt die Aufgabe zugrunde, eine Brennstoffkassette der eingangs genannten Art zu entwickeln, die bei nur wenig veränderten Außenabmessungen eine größere Anzahl von Brennstabpositionen hat.

Zur Lösung dieser Aufgabe wird eine Brennstoffkassette nach dem Oberbegriff des Anspruches 1 vorgeschlagen, die erfindungsgemäß die im kennzeichnenden Teil des Anspruches 1 genannten Merkmale hat.

Vorteilhafte Weiterbildungen der Erfindung sind in den Unteransprüchen genannt.

Die Erfindung stellt einen Bruch mit dem an sich vorteilhaften und allgemein akzeptierten Konstruktionsprinzip dar, nach dem die Brennstabpositionen in einem Teilbündel mit den Knoten eines einzigen quadratischen Gitters zusammenfallen, bzw. die Erfindung bricht mit dem ebenfalls vorteilhaften Grundsatz, daß die vier Brennstab-Teilbündel der Brennstoffkassette mit quadratischen untereinander gleich großen Querschnitten versehen sind. (Der Querschnitt eines Brennstab-Teilbündels wird definiert als die Fläche, die von einem gedachten flexiblen Faden eingeschlossen wird, der um das Teilbündel gelegt wird.)

Berechnungen haben jedoch gezeigt, daß der erzielbare Sicherheitsfaktor gegenüber Schäden bei der Verwendung von etwa 80 Brennstäben in der Brennstoffkassette so groß wird, daß ein Bruch mit dem einen oder anderen der oben genannten herkömmlichen Konstruktionsprinzipien voll gerechtfertigt ist.

Bei einer Brennstoffkassette gemäß der Erfindung ist mindestens eines der vier Brennstab-Teilbündel mit zwanzig Brennstabpositionen ausgeführt, während die Zahl der Brennstäbe in jedem der übrigen Teilbündel mindestens sechzehn und höchstens fünfundzwanzig beträgt, wobei die fünfundzwanzig Brennstabpositionen spiegelsymmetrisch zu einer vertikalen Symmetrieebene liegen.

Bei einer ersten Gruppe von Ausführungsbeispielen gemäß der Erfindung fallen zehn der zwanzig Brennstabpositionen mit den Knoten eines ersten quadratischen Gitters zusammen, während die übrigen zehn Brennstabpositionen mit den Knoten eines zweiten quadratischen Gitters zusammenfallen.

Bei einer zweiten Gruppe von Ausführungsformen gemäß der Erfindung fallen die zwanzig Brennstabpositionen mit den Knoten eines Gitters zusammen, daß ausschließlich ausregelmäßigen Dreiecken aufgebaut ist.

Bei einer dritten Gruppe von Ausführungsformen gemäß der Erfindung fallen die zwanzig Brennstabpositionen zusammen mit den Knotenpunkten eines Gitters, das nur aus Rechtecken aufgebaut ist.

Bei einer bevorzugten Ausführungsform gemäß der Erfindung haben mindestens zwei der vier Brennstab-Teilbündel der Brennstoffkassette je zwanzig Brennstabpositionen.

Anhand der in den Figuren gezeigten Ausführungsbeispiele soll die Erfindung näher erläutert werden. Es zeigen

Figuren 1, 2, 4, 6, 8 und 9 eine erste, bzw. zweite, dritte, vierte, fünfte und sechste Ausführungsform einer Brennstoffkassette gemäß der Erfindung im horizontalen Schnitt durch den aktiven Teil der Brennstoffkassette,

Figur 3 in vertikaler Draufsicht einen Abstandshalter für ein Teilbündel in der Brennstoffkassette nach Figur 2,

Figur 5 in vertikaler Draufsicht einen Abstandshalter für ein Teilbündel in einer Brennstoffkassette gemäß Figur 6,

Figur 7 im vergrößerten Maßstab die Verbindung zwischen zwei Abstandshalterzellen gemäß Figur 5,

Figur 10 in seitlicher Schnittdarstellung längs der Linie X-X in Figur 11 eine Brennstoffkassette gemäß Figur 8,

Figuren 11, 12 und 13 horizontale Schnitte längs der Linien XI-XI, XII-XII bzw. XIII-XIII in Fig. 10.

Die dargestellten Brennstoffkassetten unterscheiden sich von den in der europäischen veröffentlichten Patentanmeldung EP-A1-0 050 837 beschriebenen im wesentlichen nur hinsichtlich der Anzahl und Dicke der Brennstäbe sowie in der Art, in der diese im Verhältnis zueinander in jedem Teilbündel angeordnet sind. Die äußeren Abmessungen der Brennstoffkassetten gemäß der Erfindung können exakt mit den entsprechenden Abmessungen der oben genannten bekannten Brennstoffkassetten übereinstimmen. Brennstoffkassetten gemäß der Erfindung sind — wie die oben genannten bekannten Brennstoffkassetten — zur Verwendung im Kern von Siedewasserreaktoren bestimmt, und zwar in der Art, daß wassergefüllte Zwischenräume zwischen benachbarten Brennstoffkanälen vorhanden sind. Da der Moderatoreffekt dieser wassergefüllten Zwischenräume einen wesentlichen Einfluß auf die Kernreaktion hat, ist es wichtig, daß der Abstand zwischen ihnen, d. h. also der Querschnitt der Brennstoffkanäle (Brennstoffkassettenhülle) nicht zu groß ist.

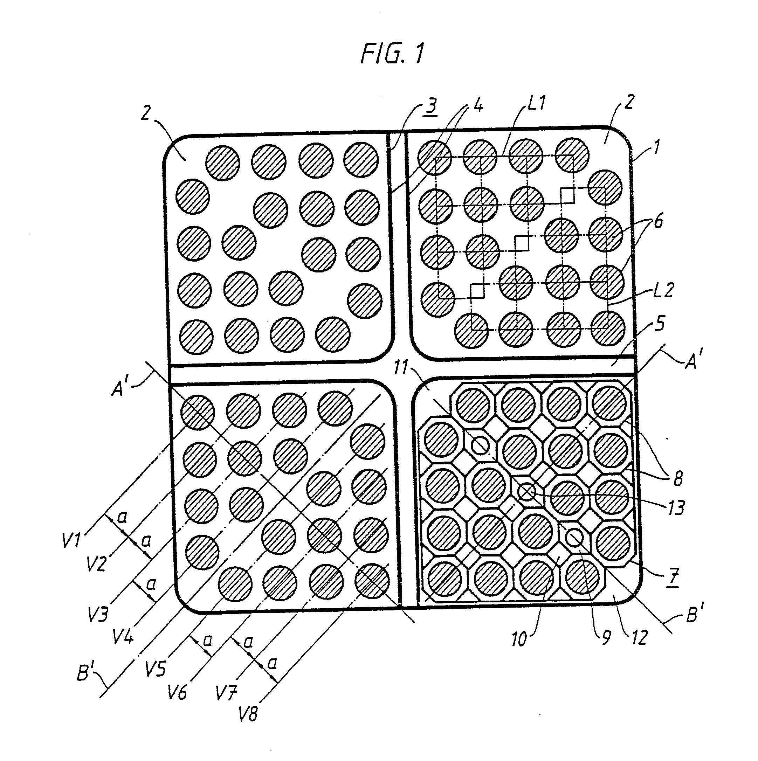

Die Hülle 1 der Brennstoffkassette gemäß Figur 1 bildet einen vertikalen Brennstoffkanal, der mit Hilfe eines langgestreckten, vertikalen Einsatzes mit kreuzförmigem Querschnitt in vier Teilkanäle 2 aufgeteilt ist. Der Einsatz 3 ist aus vier langgestreckten Blechelementen 4 mit L-förmigem Querschnitt zusammengesetzt und begrenzt einen vertikalen Wasserkanal 5 mit kreuzförmigem Querschnitt. Die Blechelemente 4 sind an der Innenseite der Hülle 1 festgeschweißt. Jeder Teilkanal nimmt ein Teilbündel auf, das 20 Brennstäbe 6 umfaßt, die mittels mehrerer, in vertikaler Richtung in dem Teilkanal hintereinander angeordneter Abstandshalter 7 positioniert sind. Der Abstandshalter 7 enthält zwanzig Abstandshalterzellen 8, die miteinander verschweißt sind. Jede Abstandshalterzelle enthält zwei als regelmäßige Achtecke geformte Blechringe, die in verschiedenen Horizontalebenen liegen und durch mehrere (nicht gezeigte) vertikal verlaufende, federnde Blechstreifen miteinander verbunden sind, wobei jeder Blechstreifen einen Mittelabschnitt hat, der so angepaßt ist, daß er gegen einen durch die Abstandshalterzellen hindurchgehenden Brennstab anliegt. Jede Abstandshalterzelle kann beispielsweise wie die in den schwedischen Patentschriften SE-C-406 258 und SE-C-409 258 beschriebene Abstandshalterzelle aufgebaut sein, jedoch mit dem Unterschied, daß statt der fünfeckigen Ringe achteckige Ringe verwendet werden. Der Abstandshalter 7 hat drei sechseckige Öffnungen 9, welche zum Teil von äußeren Flächen der vorgenannten achteckigen Ringe und zum Teil von mehreren rechteckigen Stützrahmen 10 abgegrenzt sind, von denen jeder an drei unmittelbar benachbarten Abstandshalterzellen 8 festgeschweißt ist. Die Höhe der Stützrahmen 10 ist ungefähr genauso groß wie die Höhe der Abstandshalterzellen 8.

Jedes Teilbündel hat zehn Brennstabpositionen, welche Knotenpunkte in einem ersten quadratischen Gitter L1 bilden, und zehn Brennstabpositionen, welche Knotenpunkte in einem zweiten quadratischen Gitter L2 bilden. Die Quadrate des Gitters L1 sind untereinander und mit denen des Gitters L2 kongruent und in derselben Weise orientiert, d. h. jede Seite liegt parallel zu einer entsprechenden Seite der Hülle 1 der Brennstoffkassette. Jedes der beiden Gitter kann man sich als ein Gitter vorstellen, das durch Verschiebung eines Gitters — in diagonaler Richtung — gewonnen wurde, welches mit dem anderen Gitter zusammenfällt.

Alternativ kann in jeder Öffnung 9 ein Wasserrohr 13 angeordnet sein. Dieses Wasserrohr kann mechanisch mit einer Mehrzahl von Abstandshaltern 7 derart verbunden sein, daß diese daran gehindert werden, sich in nennenswertem Umfange in vertikaler Richtung zu verschieben. In zwei Ecken der Teilbündel ist je ein Freiraum 11, 12 vorhanden, in denen wahlweise Vorrichtungen mit Abstandshalterfunktion oder Verbindungsglieder, die eine mechanische Verbindung zwischen einer oberen Verbindungsplatte und einer unteren Verbindungsplatte bilden, angeordnet sein.

Die vertikalen Mittellinien durch die Abstandshalterzellen bilden die Brennstabpositionen. Die Brennstabpositionen sind in jedem Teilbündel spiegelsymmetrisch zu zwei diagonal orientierten, vertikalen Symmetrieebenen A' und B' angeordnet, die sich unter einem Winkel von 90° schneiden. Die Symmetrieebene A' geht durch vier Brennstabpositionen. Die zwanzig Brennstabpositionen des Teilbündels sind auf jeder Seite der Symmetrieebene B' auf vier gedachte, parallel zur Symmetrieebene B' liegende und mit konstantem Abstand a voneinander angeordnete Vertikalebenen V1, V2, V3, V4 bzw. V5, V6, V7, V8 verteilt, wobei die Anzahl Brennstabpositionen pro Ebene von eins bis vier variiert.

Die beiden achteckigen Ringe jeder Abstandshalterzelle 8 haben dieselbe Orientierung, wobei jede Zellenseite zwei Ringseiten enthält. Acht Abstandshalterzellen liegen mit je einer Zellenseite in der Symmetrieebene B.

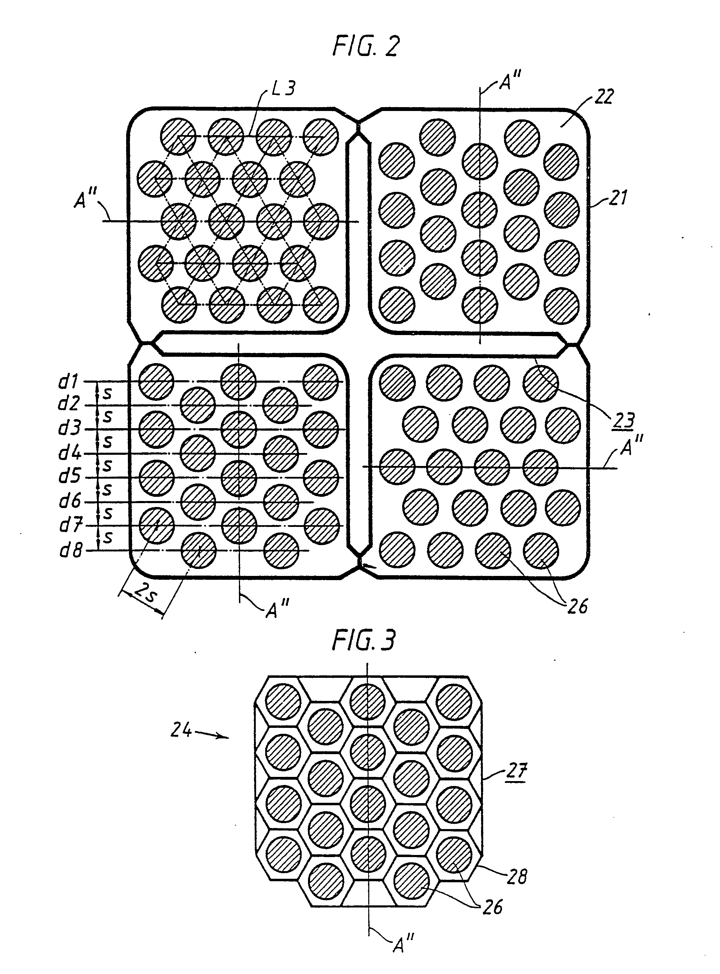

Die Hülle 21 der durch die Figuren 2 und 3 beschriebenen Brennstoffkassette hat einen im wesentlichen quadratischen Querschnitt, und ihr vertikaler Brennstoffkanal ist mit Hilfe eines langgestreckten vertikalen Einsatzes 23 in vier Teilkanäle 22 unterteilt. Der Einsatz 23 hat einen kreuzförmigen Querschnitt und ist an der Hülle 21 festgeschweißt.

Jeder Teilkanal 22 nimmt ein Teilbündel 24 auf, das zwanzig Brennstäbe enthält, die mittels mehrerer vertikal hintereinander in dem Teilkanal angeordneter Abstandshalter 27 positioniert sind. Der Abstandshalter 27 enthält zwanzig zusammengeschweißte Abstandshalterzellen 28. Jede Abstandshalterzelle enthält zwei als gleichseitige Sechsecke geformte Blechringe, die in verschiedenen Horizontalebenen liegen und durch mehrere nicht gezeigte vertikal verlaufende federnde Blechstreifen miteinander verbunden sind. Jede Abstandshalterzelle 28 kann beispielsweise wie die in den schwedischen Patentschriften SE-C-406 258 und SE-C-409 258 beschriebene Abstandshalterzelle aufgebaut sein, jedoch mit dem Unterschied, daß sechseckige Ringe anstelle von fünfeckigen verwendet werden.

Die zwanzig Brennstabpositionen des Teilbündels 24 liegen symmetrisch zu einer vertikalen Symmetrieebene A″, die durch vier Brennstabpositionen hindurchgeht und senkrecht zu einem Paar untereinander paralleler Wände des Brennstoffkanals 21 verläuft. Die zwanzig Brennstabpositionen sind mit abwechselnd drei und zwei Positionen pro Ebene auf acht gedachte Vertikalebenen d1, d2, d3, d4, d5, d6, d7, d8 verteilt, die einen konstanten Abstand s voneinander haben und senkrecht zur Symmetrieebene A″ verlaufen. In jedem Teilbündel fallen die zwanzig Brennstabpositionen mit den Knotenpunkten eines Gitters L3 zusammen, das aus gleichseitigen Dreiecken aufgebaut ist, wobei die Länge der Dreiecksseiten doppelt so groß wie der Abstand s ist.

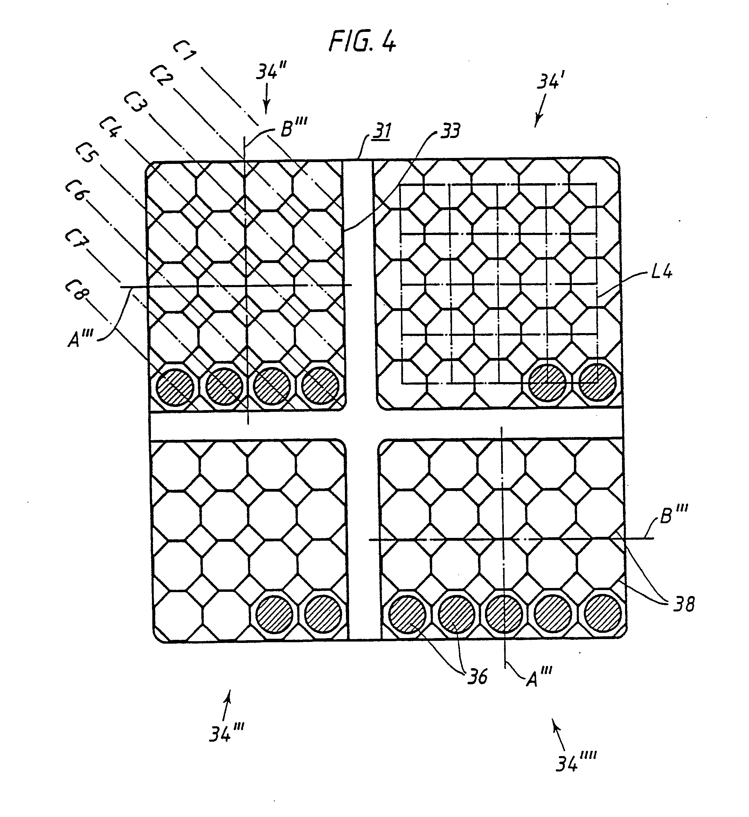

Figur 4 zeigt eine Brennstoffkassette, die einundachtzig vertikale Brennstäbe 36 von gleicher Dicke hat. Die Hülle 31 der Brennstoffkassette hat einen im wesentlichen quadratischen Querschnitt, der mit Hilfe eines kreuzförmigen Einsatzes 33 in vier Teilkanäle aufgeteilt ist, die je ein Brennstabteilbündel 34′, 34″, 34‴ bzw. 34⁗ enthalten. Die beiden Teilbündel 34″ und 34⁗ sind untereinander gleich, und ihre zugehörigen Teilkanäle haben einen rechteckigen, jedoch nicht quadratischen Querschnitt. Sie enthalten je zwanzig Brennstäbe. Die zwanzig Brennstabpositionen fallen zusammen mit den Knotenpunkten eines quadratischen Gitters und sind spiegelsymmetrisch zu zwei vertikalen Symmetrieebenen A‴ und B‴ angeordnet. Diese schneiden sich unter einem Winkel von 90° und liegen parallel zu den Seitenwänden der Hülle 31 der Brennstoffkassette. Vier Brennstabpositionen liegen in der Symmetrieebene A‴. Die zwanzig Brennstabpositionen sind ungleichmäßig auf acht gedachte zueinander parallele Vertikalebenen C1-C8 verteilt, welche räumlich so orientiert sind, daß sie die Symmetrieebene A‴ unter einem spitzen Winkel schneiden. Die Teilbündel 34″ und 34⁗ haben Abstandshalter, mit deren Hilfe die Brennstäbe in ihrem genannten quadratischen Gitter positioniert sind. Die Abstandshalterzellen 38 sind von derselben Art, wie die in Figur 1 gezeigten, und jede Abstandshalterzelle hat acht, in ihrer jeweiligen Vertikalebene liegende Zellenseiten, die vier Paare von jeweils zueinander parallelen Zellenseiten bilden. Zehn Abstandshalterzellen liegen mit je einer Zellenseite in der Symmetrieebene B‴. Die Teilbündel 34′ und 34‴ sind in Teilkanälen angeordnet, die beide einen im wesentlichen quadratischen Querschnitt haben und fünfundzwanzig bzw. sechzehn Brennstäbe enthalten. Die Abstandshalterzellen der Teilbündel 34′ und 34‴ sind in exakt gleicher Weise aufgebaut wie die Abstandshalterzellen 38 der Teilbündel 34″ und 34⁗. Sie sind ebenso wie die letztgenannten miteinander verschweißt. In allen vier Teilbündeln fallen die Brennstabpositionen zusammen mit den Knotenpunkten eines quadratischen Gitters, das denselben Aufbau hat wie das Gitter L4 des Teilbündels 34′.

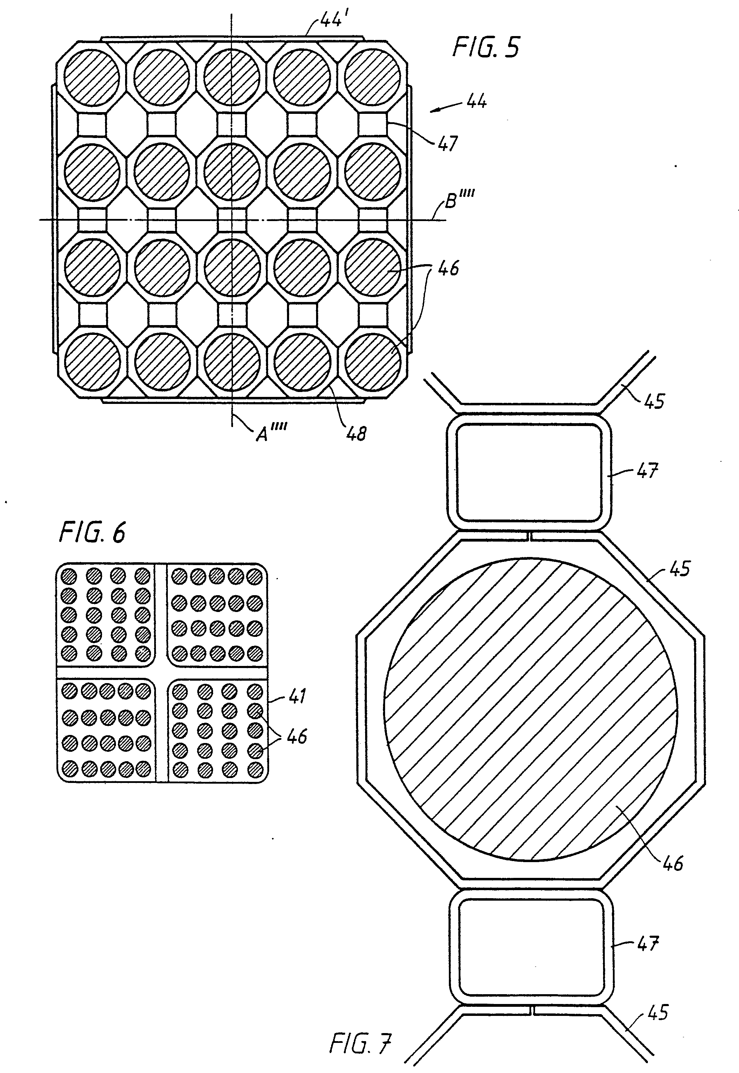

Figur 6 zeigt eine Brennstoffkassette, deren Hülle 41 einen im wesentlichen quadratischen Querschnitt hat, der mittels eines kreuzförmigen Einsatzes in vier Teilkanäle mit im wesentlichen quadratischem Querschnitt aufgeteilt ist. Jeder Teilkanal enthält ein Brennstabteilbündel 44, das gemäß Figur 5 aufgebaut ist. Es enthält vier Reihen mit je fünf Brennstäben 46. Die Brennstabpositionen sind symmetrisch zu den Symmetrieebenen A⁗ und B⁗ angeordnet, die parallel zu den Seitenwänden der Hülle 41 liegen. Jeder Brennstab 46 ist von einer achteckigen Abstandshalterzelle 48 umgeben, die in gleicher Weise wie die in Figur 1 gezeigten Abstandshalterzellen ausgeführt ist. In jeder der parallel zur Symmetrieebene B⁗ liegenden Reihe von Brennstäben sind die Abstandshalterzellen direkt aneinander geschweißt. In jeder der parallel zu der Symmetrieebene A⁗ liegenden Reihe von Brennstäben sind dagegen die vier Abstandshalterzellen durch insgesamt drei zwischen den Zellen festgeschweißte Verbindungselemente miteinander verbunden. Jedes Verbindungselement ist als rechteckiger Rahmen 47 aus dünnem Blech aufgebaut. Figur 7 zeigt zwei solche Rahmen, die an einem zu einer Abstandshalterzelle 48 gehörenden oberen, achteckigen Ring 45 aus hochkant angeordnetem Blech festgeschweißt sind. Die Ringe 45 und die Rahmen 47 haben die gleichen vertikalen Abmessungen. Jede Abstandshalterzelle 48 enthält auch einen unteren, nicht gezeigten Ring, der mit dem Ring 45 kongruent ist, und der an zwei am unteren Teil der Zelle angeordneten, nicht gezeigten Rahmen 47 festgeschweißt ist. Der gesamte Abstandshalter ist mit acht dünnen horizontalen Blechstreifen 44′ versehen (Figur 5), von denen jeder an vier benachbarten Abstandshalterzellen festgeschweißt ist. In Figur 5 sind nur vier dieser insgesamt acht Blechstreifen 44′ zu erkennen, nämlich diejenigen, die in gleicher Höhe wie die Ringe 45 angeordnet sind.

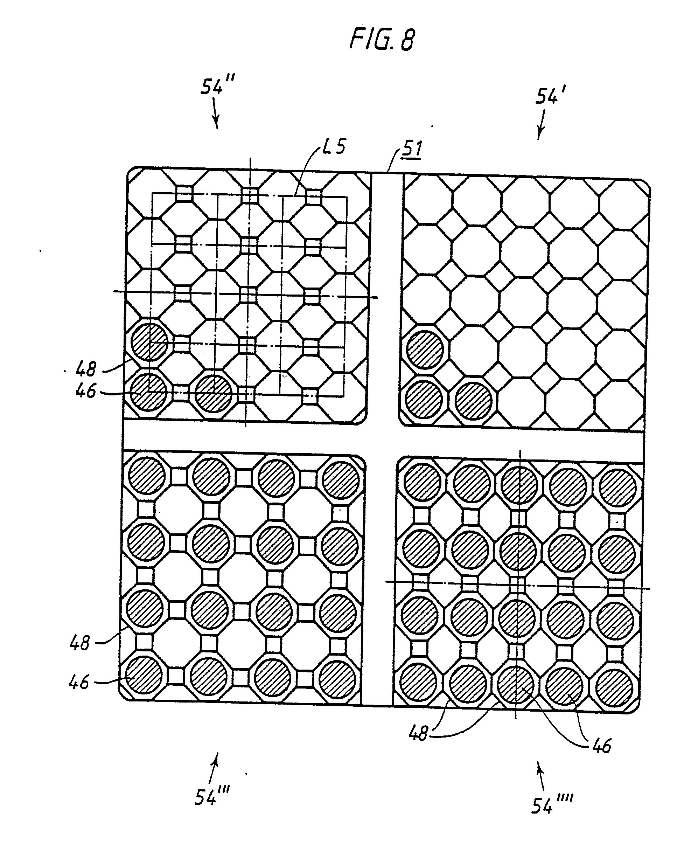

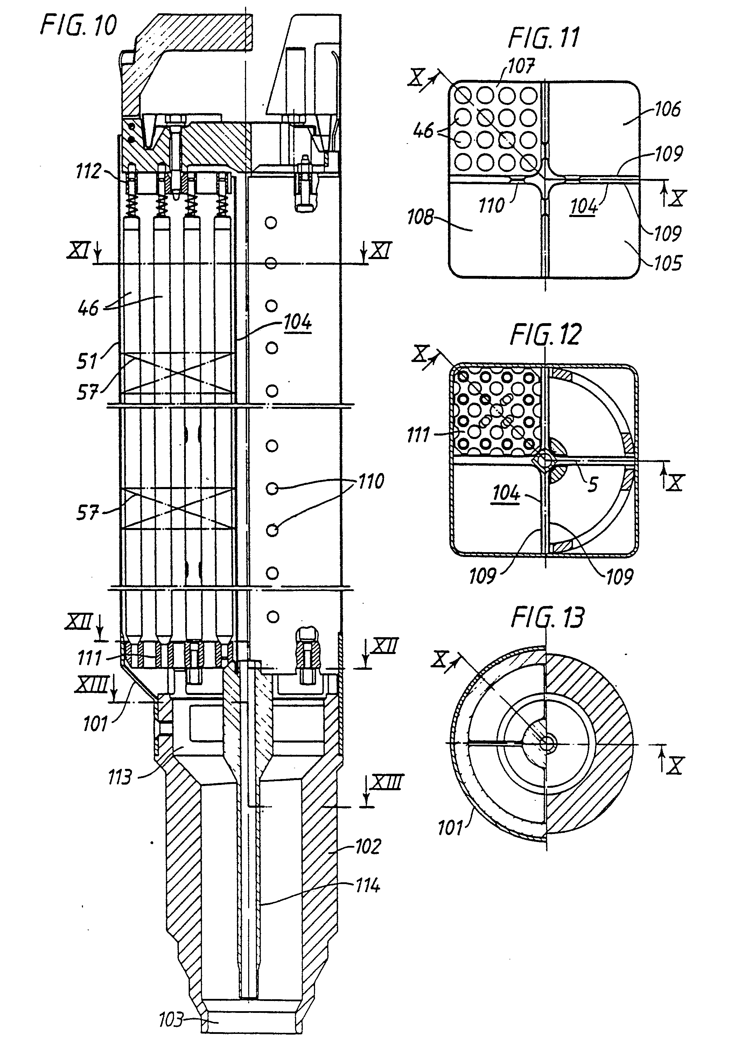

Figur 8 zeigt zusammen mit den Figuren 10 bis 13 eine Brennstoffkassette, die einundachtzig vertikale, gleich dicke Brennstäbe 46 enthält. Die Brennstäbe befinden sich in der mit im wesentlichen quadratischem Querschnitt ausgebildeten Brennstoffkassettenhülle 51, die mit Hilfe eines kreuzförmigen Einsatzes in vier im wesentlichen quadratische Teilkanäle 105-108 (Figur 11) unterteilt ist, wobei jeder Teilkanal eines der Teilbündel 54′, 54″, 54‴, 54⁗ enthält. Die Teilbündel 54″ und 54⁗ haben denselben Aufbau wie das in Figur 5 gezeigte Teilbündel 44. Jedes dieser Teilbündel enthält zwanzig Brennstabpositionen, die mit den Knotenpunkten eines Gitters L5 zusammenfallen, welches nur aus kongruenten Rechtecken aufgebaut ist. Jedes Rechteck hat zwei längere und zwei kürzere Seiten. Das Teilbündel 54‴ enthält sechzehn und das Teilbündel 54′ enthält fünfundzwanzig Brennstabpositionen.

In dem Teilbündel 54‴ sind die Abstandshalterzellen in exakt der gleichen Weise aufgebaut wie die Abstandshalterzellen 48, und sie sind miteinander durch festgeschweißte Rahmen verbunden, die in gleicher Weise aufgebaut und angeordnet sind wie die Rahmen 47. Das Teilbündel 54′ ist in der gleichen Weise aufgebaut wie das oben beschriebene Teilbündel 34′ (Figur 4).

Wie die Figuren 10 bis 13 zeigen, ist die Hülle 51 der Brennstoffkassette an ihrem unteren Ende an ein Übergangsstück 101 angeschweißt, welches aus einer Zirkoniumlegierung besteht. Die Wanddicke des Übergangsstückes 101 ist bedeutend größer als die Wanddicke der Hülle 51. An seinem unteren Ende hat das Übergangsstück 101 einen kreisförmigen Abschnitt, der mittels Schrauben an einem Einlaßmundstück 102 aus rostfreiem Stahl befestigt ist. Das Einlaßmundstück hat eine Einlaßöffnung 103 für einen Wasserstrom, der die Brennstoffkassette durchströmt. Der Wasserdurchtrittskanal 104 besteht aus vier untereinander gleichen, langgestreckten Blechelementen 105 mit L-förmigem Querschnitt. Jedes Blechelement 109 ist mit einer Vielzahl von eingepreßten Vorsprüngen 110 versehen, die in Kontakt stehen mit entsprechenden eingepreßten Vorsprüngen 110 benachbarter Blechelemente und an diese angeschweißt sind. Außerdem ist jedes Blechelement 109 mit zwei Wänden der Brennstoffkassettenhülle 51 durch eine Vielzahl von Schweißstellen verbunden, die gleichmäßig über die gesamte Länge des Wasserdurchtrittskanal 104 verteilt sind. Dadurch wirken die Blechelemente 109 als Versteifungsglieder, die Verbiegungen der Wände der Brennstoffkassettenhülle 51 entgegenwirken.

Jedes der vier Teilbündel 54′, 54″, 54‴ und 54⁗ ist mit einer unteren und einer oberen Gitterplatte (Verbindungsplatte) versehen. In dem Teilbündel 54‴ ist die untere Gitterplatte mit 111 und die obere mit 112 bezeichnet. Die untere Gitterplatte 111 wird von einem Armkreuz 113 getragen, welches an der Innenwand des Einlaßmundstücks 102 festgeschweißt ist. Das Armkreuz trägt ferner ein Wasserrohr 114, welches hydraulisch an das untere Ende des Wasserdurchtrittskanals 104 angeschlossen ist. Jedes Teilbündel ist mit einer Mehrzahl von Abstandshaltern 57 versehen, die in vertikaler Richtung hintereinander angeordnet sind.

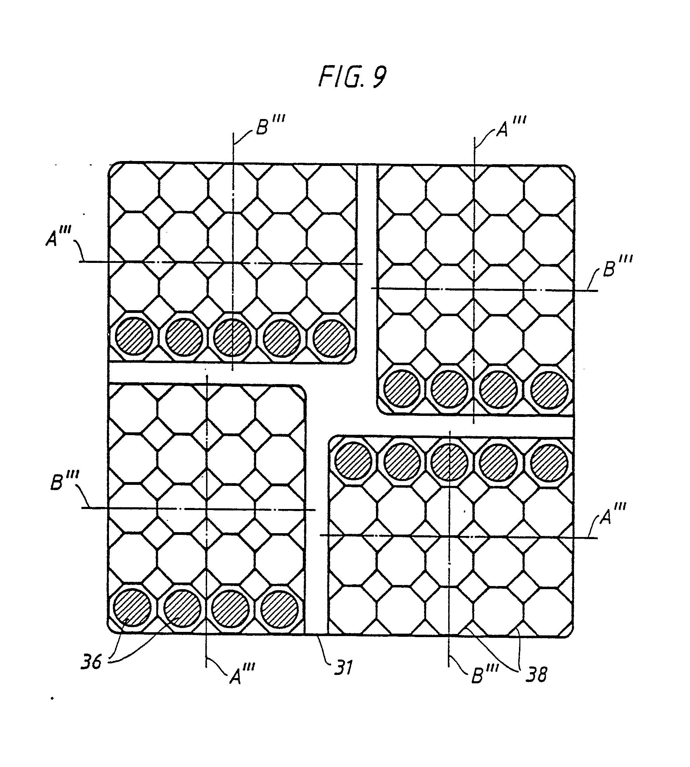

Die in Figur 9 gezeigte Brennstoffkassette unterscheidet sich von der gemäß Figur 4 nur dadurch, daß sämtliche Teilbündel wie die Teilbündel 34″ und 34⁗ in Figur 4 aufgebaut sind.

Das in den Figuren 10 bis 13 gezeigte Konstruktionsprinzip kann bei allen oben beschriebenen Ausführungsformen der Erfindung verwendet werden, wobei die oberen Gitterplatten, die unteren Gitterplatten und die Befestigungs- und Tragglieder für diese Gitterplatten in jedem Falle dem Aufbau und der Lage der Teilbündel zueinander anzupassen sind. Bei der Brennstoffkassette gemäß Figur 4 bedeutet diese Anpassung beispielsweise, daß das Rohr 114 eine exzentrische Lage im Verhältnis zu dem Einlaßmundstück 102 hat.

Ein Brennstoffkassette gemäß der Erfindung kann auch ohne das in Figur 10 gezeigte Wasserrohr 114 ausgeführt werden. Jedoch sollte der mit kreuzförmigem Querschnitt ausgebildete Wasserdurchtrittskanal an seinem unteren Ende wenigstens eine Einlaßöffnung für Wasser haben.

Die Erfindung umfaßt auch eine Vielzahl von Ausführungsformen, die nicht in den Figuren dargestellt sind. So können beispielsweise die Brennstoffkassetten gemäß den Figuren 1 und 2 von dem dort gezeigten Aufbau in der Weise abweichen, daß eines, zwei oder drei der gezeigten Teilbündel ersetzt werden durch eine entsprechende Anzahl der gezeigten Teilbündel, die einen anderen Aufbau haben, beispielsweise durch ein oder zwei Teilbündel 54′ mit fünfundzwanzig Brennstabpositionen und/oder durch ein oder zwei Teilbündel 54‴ mit sechzehn Brennstabpositionen. Ferner umfaßt die Erfindung eine Brenstoffkassette, welche von der gemäß Figur 8 insoweit abweicht, daß das Teilbündel 54‴ mit sechzehn Brennstabpositionen ersetzt worden ist durch ein Teilbündel mit fünfundzwanzig Brennstabpositionen, z. B. eins, das wie das Bündel 54′ aufgebaut ist, oder durch ein Teilbündel mit zwanzig Brennstabpositionen, z. B. das Teilbündel im Teilkanal 2 (Figur 1) oder das Teilbündel 54″.

Als ein weiteres Ausführungsbeispiel einer Brennstoffkassette gemäß der Erfindung kann eine Brennstoffkassette genannt werden, die sich von der gemäß Figur 8 dadurch unterscheidet, daß die beiden Teilbündel 54″ und 54⁗ durch zwei Teilbündel 54‴ mit sechzehn Brennstabpositionen ersetzt worden sind, während das Teilbündel 54‴ durch ein Teilbündel mit zwanzig Brennstabpositionen ersetzt worden ist, das in gleicher Weise wie das Teilbündel 54″ aufgebaut ist.

Ferner umfaßt die Erfindung eine Brennstoffkassette, die sich von der gemäß Figur 1 nur dadurch unterscheidet, daß zumindest eines der Wasserrohre 13 in einem oder mehreren Teilbündeln ersetzt worden ist durch mindestens einen irregulären Brennstab, z. B. einen speziell entworfenen Brennstab, der bedeutend dünner ist als die Brennstäbe 6.

Unter Außerachtlassung von irregulären Brennstabpositionen für irreguläre Brennstäbe der vorgenannten Art ist die Gesamtzahl der Brennstoffpositionen in einer Brennstoffkassette gemäß der Erfindung größer als einundsiebzig und kleiner als sechsundneunzig, vorzugsweise größer als sechsundsiebzig und kleiner als einundneunzig.

Die Erfindung umfaßt auch eine Brennstoffkassette, in der eine oder mehrere der in den Ansprüchen genannten Brennstoffpositionen nicht mit Brennstäben besetzt sind, beispielsweise eine Brennstoffkassette, in der einige Brennstabpositionen durch Wasserrohre besetzt sind.

Ferner kann bei einer Brennstoffkassette gemäß der Erfindung der Wasserdurchtrittskanal, welcher die Stäbe in vier Teilbündel unterteilt, anders ausgeführt werden als bei den oben beschriebenen Ausführungsbeispielen. Zum Beispiel kann der Wasserdurchtrittskanal aus einer Vielzahl vertikaler Rohre mit kreisförmigem Querschnitt bestehen, die in zwei Reihen angeordnet sind, die sich unter einem rechten Winkel schneiden.

**Patentansprüche**

1. Brennstoffkassette für einen Siedewasserreaktor mit einer Vielzahl vertikaler Brennstäbe (6, 26, 36, 46), mit einer die Brennstäbe umgebenden Hülle (1, 31, 41, 51), die vier Seitenwände und einen im wesentlichen quadratischen Querschnitt hat, und mit einem in der Hülle angeordneten vertikalen Wasserdurchtrittskanal (3, 23, 33) von im wesentlichen kreuzförmigem Querschnitt, der die Brennstäbe in vier Brennstab-Teilbündel unterteilt, von denen jedes einen im wesentlichen rechteckigen Querschnitt und eine Mehrzahl von in verschiedenen vertikalen Lagen angeordneten Abstandshaltern (7, 27, 57) hat, dadurch gekennzeichnet, daß wenigstens ein Brennstab-Teilbündel zwanzig Brennstabpositionen hat, daß die Anzahl der Brennstabpositionen in jedem der übrigen Teilbündel mindestens sechzehn und höchstens fünfundzwanzig beträgt, daß die zwanzig Brennstabpositionen des erstgenannten Teilbündels spiegelsymmetrisch zu einer ersten vertikalen Symmetrieebene (A', A'', A''', A'''') liegen, wobei vier dieser Brennstabpositionen in dieser ersten Symmetrieebene liegen, und daß die genannten zwanzig Brennstabpositionen mit den Knotenpunkten eines oder zweier Gitter (L1, L2, L3, L4, L5) zusammenfallen, die aus untereinander kongruenten Polygonen bestehen.

2. Brennstoffkassette nach Anspruch 1, dadurch gekennzeichnet, daß die genannten zwanzig Brennstabpositionen ungleichmäßig auf acht gedachte vertikale Ebenen (V1-V8) verteilt sind, welche senkrecht zu der ersten Symmetrieebene liegen, daß die zwanzig Brennstabpositionen ebenfalls spiegelsymmetrisch zu einer zweiten vertikalen Symmetrieebene (B') angeordnet sind, welche senkrecht zur ersten Symmetrieebene liegt, daß die erste Symmetrieebene im wesentlichen diagonal in bezug auf den im wesentlichen rechteckigen Querschnitt des Teilbündels liegt, und daß zehn der zwanzig Brennstabpositionen mit den Knotenpunkten eines ersten quadratischen Gitters (L1) zusammenfallen und die anderen zehn Brennstabpositionen mit den Knotenpunkten eines zweiten quadratischen Gitters (L2) zusammenfallen.

3. Brennstoffkassette nach Anspruch 2, dadurch gekennzeichnet, daß zumindest ein Teilbündel mit mindestens einem Abstandshalter (7) versehen ist, der aus einer Vielzahl von achteckigen Abstandshalterzellen (8) aufgebaut ist, daß jede Abstandshalterzelle acht Zellenwände hat, von denen jede in einer entsprechenden vertikalen Ebene liegt, daß die Zellenwände vier Paare von jeweils zueinander parallelen Zellenwänden bilden, von denen zwei Paare jeweils parallel zu einem entsprechenden Paar der Seitenwände der Brennstoffkanalhülle (1) liegen und daß acht der genannten Abstandszellen (8) so angeordnet sind, daß sie mit einer Zellenwand in der zweiten Symmetrieebene (B') liegen.

4. Brennstoffkassette nach Anspruch 3, dadurch gekennzeichnet, daß jeder Abstandshalter drei Öffnungen (9) hat, deren vertikale Mittellinien in der zweiten Symmetrieebene (B') liegen, und daß in mindestens einer dieser Öffnungen ein Wasserrohr (13) angeordnet ist.

5. Brennstoffkassette nach Anspruch 1, dadurch gekennzeichnet, daß die genannten zwanzig Brennstabpositionen ungleichmäßig auf acht gedachte vertikale Ebenen (d1-d8) verteilt sind, welche senkrecht zu der ersten Symmetrieebene (A'') liegen, daß die erste Symmetrieebene (A'') parallel zu zwei der vier Wände der Brennstoffkassettenhülle (21) liegt, daß in vier der acht vertikalen Ebenen (d1-d8) je drei Brennstoffpositionen liegen, daß in den übrigen vier vertikalen Ebenen (d1-d8) je zwei Brennstabpositionen liegen und daß die genannten zwanzig Brennstabpositionen mit den Knotenpunkten eines aus Dreiecken aufgebauten Gitters (L3) zusammenfallen.

6. Brennstoffkassette nach Anspruch 5, dadurch gekennzeichnet, daß das genannte zumindest eine Teilbündel mit einer Mehrzahl von Abstandshaltern (27) versehen ist, die in unterschiedlichen vertikalen Lagen angeordnet sind, daß jeder Abstandshalter aus einer Vielzahl von sechseckigen Abstandshalterzellen (28) aufgebaut ist, von denen jede drei Paare von jeweils zueinander parallelen Zellenwänden hat, daß die Zellenwände in vertikalen Ebenen liegen und daß jede Abstandshalterzelle ein Zellwändepaar hat, welches parallel zu einer Seitenwand der Brennstoffkassettenhülle (21) liegt.

7. Brennstoffkassette nach Anspruch 1, dadurch gekennzeichnet, daß die genannten zwanzig Brennstabpositionen ungleichmäßig auf acht gedachte zueinander parallele vertikale Ebenen (C1-C8) verteilt sind, welche so orientiert sind, daß sie die genannte erste Symmetrieebene unter einem spitzen Winkel schneiden, daß die zwanzig Brennstoffpositionen ebenfalls spiegelsymmetrisch zu einer zweiten vertikalen Symmetrieebene (B''') liegen, welche senkrecht zu der genannten ersten Symmetrieebene liegt, daß die erste Symmetrieebene im wesentlichen parallel zu einer der Seitenwände der Brennstoffkassettenhülle liegt und daß die zwanzig Brennstabpositionen mit den Knotenpunkten eines Gitters zusammenfallen, das aus untereinander kongruenten Rechtecken aufgebaut ist.

8. Brennstoffkassette nach Anspruch 7, dadurch gekennzeichnet, daß das genannte zumindest eine Teilbündel mit einer Mehrzahl von Abstandshaltern versehen ist, die in verschiedener vertikaler Höhe liegen, daß jeder dieser Abstandshalter aus einer Vielzahl von achteckigen Abstandshalterzellen (38) aufgebaut ist, wobei jede vier Paare von jeweils zueinander parallelen Zellwänden hat, daß zwei dieser Paare von Zellwänden parallel zu einem entsprechenden Paar der Seitenwände der Brennstoffkassettenhülle liegen und daß zehn der Abstandshalterzellen (38) mit je einer Zellenwand in der zweiten Symmetrieebene (B''') liegen.

9. Brennstoffkassette nach Anspruch 7, dadurch gekennzeichnet, daß die Anzahl der genannten zwanzig Brennstabpositionen aufweisenden Teilbündel zwei beträgt, daß diese beiden Teilbündel (34'', 34'''') derart orientiert sind, daß die erste Symmetrieebene (A'') in dem einen Teilbündel parallel zu der zweiten Symmetrieebene (B''') des anderen Teilbündels liegt und daß die Brennstoffkassette zwei weitere Teilbündel mit im wesentlichen quadratischen Querschnitt enthält, von denen das eine Teilbündel (34''') sechzehn Brennstabpositionen und das andere Teilbündel (34') fünfundzwanzig Brennstabpositionen enthält.

10. Brennstoffkassette nach Anspruch 7, dadurch gekennzeichnet, daß die Anzahl der genannten Teilbündel mit zwanzig Brennstabpositionen vier beträgt, wobei die Teilbündel derart orientiert sind, daß die genannte erste Symmetrieebene (A''') für zwei der Teilbündel senkrecht zu ein und derselben Wand der Brennstoffkassettenhülle liegt und daß die genannte erste Symmetrieebene (A''') in den beiden übrigen Teilbündeln parallel zu der eben genannten Wand der Brennstoffkassettenhülle liegt.

11. Brennstoffkassette nach Anspruch 7, dadurch gekennzeichnet, daß jeder Abstandshalter in dem genannten zumindest einen Teilbündel aus einer Vielzahl von achteckigen Abstandshalterzellen (48) besteht, die einerseits vier parallel zu der genannten zweiten Symmetrieebene (B'''') liegende Reihen mit je fünf unmittelbar nebeneinanderliegenden Abstandshalterzellen bilden und andererseits vier parallel zu der ersten Symmetrieebene (A'''') liegende Reihen mit je vier Abstandshalterzellen bilden, welche Zellen mechanisch mit einander über jeweils zwischen zwei benachbarten Zellen liegenden Zwischenelementen (47) verbunden sind.

12. Brennstoffkassette nach Anspruch 11, dadurch gekennzeichnet, daß die Anzahl der genannten Teilbündel (54'', 54'''') mit zwanzig Brennstabpositionen zwei beträgt, daß ein drittes Teilbündel (54''') sechzehn Brennstabpositionen in einem quadratischen Gitter hat und daß ein viertes Teilbündel (54') fünfundzwanzig Brennstabpositionen in einem quadratischen Gitter hat.

13. Brennstoffkassette nach einem der vorhergehenden Ansprüche, dadurch gekennzeichnet, daß die Anzahl der genannten Teilbündel mit zwanzig Brennstabpositionen mindestens zwei beträgt.

**Claims**

1. Fuel assembly for a boiling water reactor with a plurality of vertical fuel rods (6, 26, 36, 46) with a casing (1, 31, 41, 51) surrounding the fuel rods and having four side walls and a substantially square cross-section, and with a vertical water passage channel (3, 23, 33) arranged in the casing and having a substantially cruciform cross-section, said water passage channel dividing the fuel rods in four fuel rods sub-bundles, each of which has a substantially rectangular cross-section and a plurality of spacers (7, 27, 57) arranged at different vertical levels, characterized in that at least one fuel rod sub-bundle includes twenty fuel rod positions, that the number of fuel rod positions in each of the remaining sub-bundles is at least sixteen and at most twenty-five, that the twenty fuel rod positions of the first-mentioned sub-bundle are positioned mirror-symmetrically in relation to a first vertical symmetry plane (A', A'', A''', A''''), with four of these fuel rod positions lying in said first symmetry plane, and that said twenty fuel rod positions coincide with the nodes of one or two lattices (L1, L2, L3, L4, L5) consisting of mutually congruent polygons.

2. Fuel assembly according to claim 1, characterized in that said twenty fuel rod positions are unevenly distributed among eight imaginary vertical planes (V1-V8) lying perpendicularly to said first symmetry plane, that said twenty fuel rod positions are also arranged mirror-symmetrically in relation to a second vertical symmetry plane (B') lying perpendicularly to said first symmetry plane, that said first symmetry plane lies substantially diagonally to the substantially rectangular cross-section of the sub-bundle, and that ten of the twenty fuel rod positions coincide with the nodes of a first square lattice (L1) and the other ten fuel rod positions coincide with the nodes of a second square lattice (L2).

3. Fuel assembly according to claim 2, characterized in that said at least one sub-bundle is provided with at least one spacer (7), which is composed of a plurality of octagonal spacer cells (8), that each spacer cell has eight cell walls each of which lies in a corresponding vertical plane, that the cell walls form four pairs of mutually parallel cell walls two pairs of which are in each case parallel to a corresponding pair of side walls of the fuel channel casing (1), and that eight of said spacer cells (8) are arranged such that they are positioned with one cell wall in said second symmetry plane (B′).

4. Fuel assembly according to claim 3, characterized in that each spacer is provided with three openings (9) the vertical center lines of which lie in said second symmetry plane (B′) and that in at least one of these openings a water tube (13) is arranged.

5. Fuel assembly according to claim 1, characterized in that said twenty fuel rod positions are unevenly distributed among eight imaginary vertical planes (d1-d8) lying perpendicularly to said first symmetry plane (A″), that said first symmetry plane (A″) lies parallel to two of the four walls of the fuel assembly casing (21), that in each of four of the eight vertical planes (d1-d8) are positioned three fuel rod positions, that in each of the remaining four vertical planes (d1-d8) are positioned two fuel rod positions, and that said twenty fuel rod positions coincide with the nodes of a lattice (L3) consisting of triangles.

6. Fuel assembly according to claim 5, characterized in that said at least one sub-bundle is provided with a plurality of spacers (27) arranged at different vertical levels, that each spacer consists of a plurality of hexagonal spacer cells (28) each of which has three pairs of mutually parallel cell walls, that the cell walls lie in vertical planes, and that each spacer cell has one pair of cell walls lying parallel to a side wall of the fuel assembly casing (21).

7. Fuel assembly according to claim 1, characterized in that said twenty fuel rod positions are unevenly distributed among eight imaginary mutually parallel vertical planes (C1-C8) oriented in such a way that they intersect said first symmetry plane at an acute angle, that the twenty fuel rod positions are also oriented mirror-symmetrical in relation to a second symmetry plane (B‴) lying perpendicularly to said first symmetry plane, that said first symmetry plane lies substantially parallel to one of the side walls of the fuel assembly casing, and that the twenty fuel rod positions coincide with the nodes of lattice composed of mutually congruent rectangles.

8. Fuel assembly according to claim 7, characterized in that said at least one sub-bundle is provided with a plurality of spacers positioned at different vertical levels, that each of these spacers is composed of a plurality of octagonal spacer cells (38) each of which has four pairs of mutually parallel cell walls, that two of these pairs lie parallel to a corresponding pair of side walls of the fuel channel casing, and that ten of said spacer cells (38) are positioned with one cell wall each in said second symmetry plane (B‴).

9. Fuel assembly according to claim 7, characterized in that the number of said sub-bundles comprising twenty fuel rod positions is two, that these two sub-bundles (34″, 34⁗) are oriented in such a way that the first symmetry plane (A‴) in one of the sub-bundles is parallel to the second symmetry plane (B‴) of the other sub-bundle, and that the fuel assembly contains two more sub-bundles with a substantially square cross-section, one of these sub-bundle (34‴) containing sixteen fuel rod positions and the other sub-bundle (34′) containing twenty-five fuel rod positions.

10. Fuel assembly according to claim 7, characterized in that the number of said sub-bundles comprising twenty fuel rod positions is four, the sub-bundles oriented in such a way, that for two of the sub-bundles said first symmetry plane (A‴) is perpendicular to one and the same wall of the fuel assembly casing, and that said first symmetry plane (A‴) in the two remaining sub-bundles is parallel to the afore-mentioned wall of the fuel assembly casing.

11. Fuel assembly according to claim 7, characterized in that each spacer in said at least one sub-bundle consists of a plurality of octagonal spacer cells (48), which on the one hand form four rows of spacer cells being parallel to said second symmetry plane (B⁗) and consisting each of five immediately adjacently positioned spacer cells, and on the other hand form four rows with four spacer cells each each row being parallel to said first symmetry plane (A⁗), which cells are mechanically connected to each other by means of intermediate elements (47) each positioned between two adjacent cells.

12. Fuel assembly according to claim 11, characterized in that the number of said sub-bundles (54″, 54⁗) comprising twenty fuel rod positions is two, that a third sub-bundle (54‴) has sixteen fuel rod positions in a square lattice, and that a fourth sub-bundle (54′) has twenty-five fuel rod positions in a square lattice.

13. Fuel assembly according to any of the preceding claims characterized in that the number of said sub-bundles comprising twenty fuel rod positions is at least two.

### Revendications

1. Cassette à combustible pour un réacteur à eau bouillante avec une multiplicité de barres de combustible verticales (6, 26, 36, 46), avec une enveloppe (1, 31, 41, 51) entourant les barres de combustible, qui possède quatre parois latérales et une section transversale essentiellement carrée, et avec un canal de passage d'eau vertical (3, 23, 33) disposé dans l'enveloppe, avec une section transversale essentiellement cruciforme, qui subdivise les barres de combustible en quatre sous-groupes de barres de combustible, dont chacun possède une section transversale essentiellement rectangulaire et une multiplicité de supports d'écartement (7, 27, 57) disposés en différentes positions verticales, caractérisée en ce qu'au moins un sous-groupe de barres de combustible possède vingt positions de barres de combustible, en ce que le nombre des positions de barres de combustible dans chacun des autres sous-groupes atteint au moins seize et au plus vingt-cinq, en ce que les vingt positions de barres de combustible du premier sous-groupe précité sont situées symétriquement par rapport à un premier plan de symétrie vertical (A′, A″, A‴, A⁗), quatre de ces positions de barres de combustible étant situées dans ce premier plan de symétrie, et en ce que les vingt positions de barres de combustible précitées coïncident avec les points d'intersection d'un ou deux réseaux (L1, L2, L3, L4, L5), qui sont constitués par des polygones congruents entre eux.

2. Cassette à combustible suivant la revendication 1, caractérisée en ce que les vingt positions de barres de combustible précitées sont réparties irrégulièrement sur huit plans verticaux imaginaires (V1-V8), qui se situent perpendiculairement au premier plan de symétrie, en ce que les vingt positions de barres de combustible sont également disposées symétriquement par rapport à un second plan de symétrie vertical (B'), qui est situé perpendiculairement au premier plan de symétrie, en ce que le premier plan de symétrie se situe essentiellement en diagonale par rapport à la section transversale essentiellement rectangulaire du sous-groupe, et en ce que dix des vingt positions de barres de combustible coïncident avec les points d'intersection d'un premier réseau carré (L1) et les dix autres positions de barres de combustible coïncident avec les points d'intersection d'un second réseau carré (L2).

3. Cassette à combustible suivant la revendication 2, caractérisée en ce qu'au moins un sous-groupe est doté d'au moins un support d'écartement (7) qui est constitué par une multiplicité de cellules octogonales (8) de support d'écartement, en ce que chaque cellule de support d'écartement possède huit parois de cellule, dont chacune est située dans un plan vertical correspondant, en ce que les parois de cellule forment quatre paires de parois de cellule parallèles entre elles, dont deux paires se situent à chaque fois parallèlement à une paire correspondante des parois latérales de l'enveloppe (1) de canal à combustible, et en ce que huit des cellules d'écartement (8) précitées sont agencées de telle sorte qu'elles se situent par une paroi de cellule dans le second plan de symétrie (B').

4. Cassette à combustible suivant la revendication 3, caractérisée en ce que chaque support d'écartement possède trois ouvertures (9), dont les axes verticaux se situent dans le second plan de symétrie (B'), et en ce que dans au moins une de ces ouvertures est disposé un tube à eau (13).

5. Cassette à combustible suivant la revendication 1, caractérisée en ce que lesdites vingt positions de barres de combustible sont réparties inégalement sur huit plans verticaux imaginaires (d1-d8), qui se situent perpendiculairement au premier plan de symétrie (A"), en ce que le premier plan de symétrie (A") est parallèle à deux des quatre parois de l'enveloppe (21) de la cassette à combustible, en ce que dans quatre des huit plans verticaux (d1-d8) sont situées à chaque fois trois positions de combustible, en ce que dans les quatre autres plans verticaux (d1-d8) sont situées à chaque fois deux positions de barres de combustible, et en ce que lesdites vingt positions de barres de combustible coïncident avec les points d'intersection d'un réseau composé de triangles (L3).

6. Cassette à combustible suivant la revendication 5, caractérisée en ce qu'au moins un sous-groupe précité est doté d'une multiplicité de supports d'écartement (27), qui sont disposés en des positions verticales différentes, en ce que chaque support d'écartement est constitué par une multiplicité de cellules hexagonales d'écartement (28), dont chacune possède trois paires de parois de cellule parallèles entre elles, en ce que les parois de cellule se situent dans des plans verticaux, et en ce que chaque cellule de support d'écartement possède une paire de parois de cellule qui est parallèle à une paroi latérale de l'enveloppe (21) de la cassette à combustible.

7. Cassette à combustible suivant la revendication 1, caractérisée en ce que lesdites vingt positions de barres de combustible sont réparties irrégulièrement sur huit plans verticaux imaginaires (C1-C8) parallèles entre eux, qui sont orientés de telle sorte qu'ils recoupent le premier plan de symétrie précité sous un angle aigu, en ce que les vingt positions de barres de combustible se situent également parallèlement à un second plan de symétrie vertical (B'''), qui se situe perpendiculairement au premier plan de symétrie précité, en ce que le premier plan de symétrie se situe essentiellement parallèlement à l'une des parois latérales de l'enveloppe de cassette à combustible, et en ce que les vingt positions de barres de combustible coïncident avec les points d'intersection d'un réseau qui est constitué par des rectangles congruents entre eux.

8. Cassette à combustible suivant la revendication 7, caractérisée en ce qu'au moins un sous-groupe précité est doté d'une multiplicité de supports d'écartement qui se situent à des hauteurs verticales différentes, en ce que chacun de ces supports d'écartement est constitué par une multiplicité de cellules de support d'écartement octogonales (38), chacune ayant quatre paires de parois de cellule parallèles entre elles, en ce que deux de ces paires de parois de cellule sont parallèles à une paire correspondante des parois latérales de l'enveloppe de cassette à combustible, et en ce que dix des cellules de support d'écartement (38) se situent chacune par une paroi de cellule dans le second plan de symétrie (B''').

9. Cassette à combustible suivant la revendication 7, caractérisée en ce que le nombre de sous-groupes précités présentant vingt positions de barres de combustible atteint deux, en ce que ces deux sous-groupes (34", 34'''') sont orientés de telle sorte que le premier plan de symétrie (A''') se situe dans un sous-groupe parallèlement au second plan de symétrie (B''') de l'autre sous-groupe, et en ce que la cassette à combustible contient deux autres sous-groupes avec une section transversale essentiellement carrée, parmi lesquels un sous-groupe (34''') contient seize positions de barres de combustible et l'autre sous-groupe (34') vingt-cinq positions de barres de combustible.

10. Cassette à combustible suivant la revendication 7, caractérisée en ce que le nombre des sous-groupes précités avec vingt positions de barres de combustible atteint quatre, les sous-groupes étant orientés de telle sorte que le premier plan de symétrie (A''') précité pour deux des sous-groupes est perpendiculaire à une même paroi de l'enveloppe de cassette à combustible, et en ce que le premier plan de symétrie (A''') précité dans les deux autres sous-groupes est parallèle à la paroi venant d'être citée de l'enveloppe de cassette à combustible.

11. Cassette à combustible suivant la revendication 7, caractérisée en ce que chaque support d'écartement dans au moins un sous-groupe précité est constitué par une multiplicité de cellules octogonales (48) de support d'écartement, qui forment d'une part quatre rangées situées parallèlement au second plan de symétrie (B'''') précité avec à chaque fois cinq cellules de support d'écartement situées directement adjacentes, et d'autre part quatre rangées situées parallèlement au premier plan de symétrie (A'''') avec chacune quatre cellules de support d'écartement, cellules qui sont reliées mécaniquement entre elles par l'intermédiaire d'éléments intermédiaires (47) situés à chaque fois entre deux cellules adjacentes.

12. Cassette à combustible suivant la revendication 11, caractérisée en ce que le nombre des sous-groupes précités (54'', 54'''') avec vingt positions de barres de combustible atteint deux, en ce qu'un troisième sous-groupe (54''') possède seize positions de barres de combustible en un réseau carré, et en ce qu'un quatrième sous-groupe (54') possède vingt-cinq positions de barres de combustible en un réseau carré.

13. Cassette suivant une des revendications précédentes, caractérisée en ce que le nombre des sous-groupes précités avec vingt positions de barres de combustible atteint au moins deux.

FIG. 1

FIG. 2

FIG. 3

FIG. 4

FIG. 5

FIG. 6

FIG. 7

# FIG. 8

FIG. 9

FIG. 10

112

XI

46

104

51

57

57

110

XII

111

XIII

101

113

102

114

103

FIG. 11

107

46

106

109

108

110

104

109

105

FIG. 12

111

104

5

109

109

FIG. 13

101

7